(19) Europäisches Patentamt European Patent Office Office européen des brevets

(11) **EP 3 282 420 B1**

(12) **EUROPEAN PATENT SPECIFICATION**

(45) Date of publication and mention of the grant of the patent:
**04.05.2022 Bulletin 2022/18**

(21) Application number: **16183187.0**

(22) Date of filing: **08.08.2016**

(51) International Patent Classification (IPC):
**G06T 7/00** (2017.01)

(52) Cooperative Patent Classification (CPC):
**G06T 7/0004;** G06T 2207/10016; G06T 2207/30252

(54) **METHOD AND APPARATUS FOR SOILING DETECTION, IMAGE PROCESSING SYSTEM AND ADVANCED DRIVER ASSISTANCE SYSTEM**

VERFAHREN UND VORRICHTUNG ZUR VERSCHMUTZUNGSDETEKTION, BILDVERARBEITUNGSSYSTEM UND FORTSCHRITTLICHES FAHRERASSISTENZSYSTEM

PROCÉDÉ ET APPAREIL DE DÉTECTION DE SALISSURES, SYSTÈME DE TRAITEMENT D'IMAGE ET SYSTÈME D'ASSISTANCE AU CONDUCTEUR AVANCÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.02.2018 Bulletin 2018/07**

(73) Proprietor: **Continental Automotive GmbH 30165 Hannover (DE)**

(72) Inventors:
• **Guerreiro, Rui**
  **Brighton, BN1 5PP (GB)**
• **Kadyrov, Alexander**
  **Eastbourne, BN22 8AL (GB)**

(74) Representative: **Continental Corporation c/o Continental Automotive GmbH Intellectual Property Nordostpark 30 90411 Nürnberg (DE)**

(56) References cited:
**EP-A1- 2 351 351    US-A1- 2015 298 657**

• **CHEN LI ET AL: "Dust particle detection in traffic surveillance video using motion singularity analysis", DIGITAL SIGNAL PROCESSING, ACADEMIC PRESS, ORLANDO,FL, US, vol. 58, 1 August 2016 (2016-08-01), pages 127-133, XP029727491, ISSN: 1051-2004, DOI: 10.1016/J.DSP.2016.07.020**
• **KATAJAMAEKI J ET AL: "OBJECTIVE QUALITY POTENTIAL MEASURES OF NATURAL COLOR IMAGES", JOURNAL OF IMAGING SCIENCE AND TECHNOLOGY, SPIE - THE INTERNATIONAL SOCIETY FOR OPTICAL ENGINEERING, US, vol. 42, no. 3, 1 May 1998 (1998-05-01), pages 250-263, XP000979385, ISSN: 1062-3701**
• **S K Satpathy ET AL: "Adaptive Non-Linear Filtering Techniques for Image Restoration", International Jurnal of Electrical, Computer, Energetic and Communication Engineering, 1 January 2003 (2003-01-01), pages 948-955, XP055340549, Retrieved from the Internet: URL:http://www.waset.org/publications/1518 0 [retrieved on 2017-01-31]**

**Description**

The present invention relates to a method and an apparatus for soiling detection on an image system. Further, the present invention relates to an image processing system and an advanced driver assistance system comprising an image processing system.

Prior art

Present day passenger vehicles are increasingly equipped with camera-based assistance systems. These systems capture the surrounding environment of the vehicle, and provide a variety of functions for improving driving safety and comfort. The functionality of these systems is based on the analysis of the recorded image data. Therefore, the quality of the system's predictions is directly related to the quality of the image data.

One factor that affects the image quality and which is difficult to control is the degree of contamination of the optical system of the camera. Cameras may be positioned at places with less risk of contamination, or cameras may be cleaned, for instance, by an electric viper. Despite of these provisions, it is impossible to avoid the contamination of the optical system completely. Therefore, it is necessary to detect soiling on a camera lens automatically in order to trigger an appropriate action.

EP 2 351 351 A1 discloses a method for detecting the presence of an impediment on a lens of an image capture device. At least two image frames are captured to detect similar portions in the image frames. Presence of an impediment on the lens is determined by analyzing the luminance of the respective area. In particular, it is suggested that the method is performed in a vehicle which is moving at a speed in the range of 5 km/h to 30 km/h.

Chen Li et al., "Dust particle detection in traffic surveillance video using motion singularity analysis" concerns a method of dust particle detection in video, that aims to automatically determine whether the video is degraded by dust particles or not. Dust particles are usually stuck on the camera lends and typically temporally static in the images of a video sequence captured from a dynamic scene. The moving objects in the scene can be occluded by the dust; consequently, the motion information of moving objects tends to yield singularity. Motivated by this, dust detection is proposed in this paper by exploiting a motion singularity analysis in the video. First, the optical model of dust particle is theoretically studied in by simulating optical density of artifacts produced by dust particles. Then, the optical flow is exploited to perform motion singularity analysis for blind dust detection in the video without the need for ground truth dust-free video. More specifically, a singularity model of optical flow is proposed in this paper using the direction of the motion flow field, instead of the amplitude of the motion flow field. The proposed motion singularity model is further incorporated into a temporal voting mechanism to develop an automatic dust particle detection in the video. Experiments are conducted using both artificially-simulated dust-degraded video and real-world dust-degraded video to demonstrate that the proposed approach outperforms conventional approaches to achieve more accurate dust detection.

Katajamaeki J et al. "Objective quality potential measures of natural color images" discloses concerns estimating the quality of natural color images from the digital image itself, for the purpose of determining whether the quality is sufficient for printing or displaying at some specified quality level. The problem of measuring simply defined parameters that correlate reasonably with human perception is discussed.

Then an algorithm is described that measures sharpness, stochastic noise, and the blocking artifact of JPEG compression. The sharpness measure is the maximum of local sharpness, defined as the maximum gradient at an edge divided by the edge contrast. The algorithm behaves fairly consistently with respect to the amount of simulated blur and the measure correlates with the subjective sharpness of different images. The output of the stochastic noise algorithm is an unspecified number of noise levels, each of which is associated with the corresponding mean luminance. The algorithm computes a gradient image using the Sobel filters and uses the bivariate histogram of gradient and luminance to find the noise levels. The gradient filters are suitable for estimating the effect of power spectrum on noise visibility, but the discrimination between image details and noise is only partially solved by this method. The blocking artifact measure describes a characteristic spikiness in the histogram of the Sobel gradient.

US 2015/298657 A1 (KANTER PASCAL [DE] ET AL) 22 October 2015 (2015-10-22 discloses another example of evaluating image sharpness of an image area. But, the process of determining a soiling measure described further is different.

Disclosure of the invention

The present invention provides a method for soiling detection on an image system with the features of independent claim 1. Further, the present invention provides a soiling detection apparatus with the features of independent claim 4.

In a first aspect, the present invention provides a method for soiling detection on an imaging system comprising the steps of capturing, by the imaging system, a first frame, while the imaging system is moving; computing first image processing data based on the captured first frame; capturing, by the imaging system, a second frame, while the imaging system is not moving; computing second image processing data based on the captured second frame; and determining a soiling measure for each pixel position covered by the imaging system based on the computed first image processing data and the computed second image processing data, wherein a said soiling measure comprising a first value specifying a degree of soiling and a second value specifying a confidence value of the first value.

According to a second aspect, the present invention provides a soiling detection apparatus for detecting soiling on an imaging system. The apparatus comprises an image receiving unit, an image data processor, and a soiling detector. The image receiving unit is adapted to receive a first frame, which is captured by the imaging system while the imaging system is moving. The image receiving unit is further adapted to receive a second frame, captured by the imaging system while the imaging system is not moving. The image data processor is adapted to compute first image processing data based on the received first frame and compute second image processing data based on the received second frame. The soil ing detector is adapted to determine a soiling measure for each pixel position covered by the imaging system based on the computed first image processing data and the computed second image processing data. The soiling measure comprises a first value specifying a degree of soiling and a second value specifying a confidence value of the first value.

Further, the present invention provides an image processing system comprising an imaging system including a camera. The imaging system is adapted to capture image data. The image processing system further comprises a soiling detection apparatus according to the second aspect of the present invention.

Further, the present invention provides an advanced driver assistance system comprising an image processing system according with a soiling detection apparatus.

Advantages of the invention

When using image data as a basis for security-related applications, for instance, automated control of a vehicle, it is important to detect soiling on the imaging system. Some conventional methods are able to detect soiling when the vehicle is moving. However, these methods cannot perform soiling detection when the vehicle is standing still. Hence, when a vehicle is standing still at an intersection and another vehicle splashes water onto the lens, such a contamination cannot be detected by a soiling detection method, since a conventional soiling detection method requires a moving vehicle.

It is an idea of the present invention, to take into account the above-mentioned problem and to provide soiling detection on an imaging system which is able to detect a contamination of the imaging system while the imaging system is standing still. Accordingly, reference image data are generated while the imaging system is moving, and these reference image data are used as a basis for analyzing the image data which are captured when the imaging system is standing still. In particular, the reference image data as well as the image data which are captured while the imaging system stands still, are processed in order to remove elements in the image data caused by moving objects in the coverage area of the imaging system. In this way, it is possible to obtain image processing data without any elements of moving objects. Thus, a reliable detection of artifacts caused by a contamination of the imaging system can be achieved.

Hence, a fast and reliable soiling detection of an imaging system is provided. In this way, the reliability of the individual pixels of the image data provided by the imaging system can be evaluated. Hence, the reliability of the image data provided by the imaging system can be increased.

The soiling measure which is provided by the present invention comprises at least two values. A first value specifies a degree of soiling for each pixel provided by the imaging system. Additionally, a second value specifies a confidence value of the first value. In this way, the reliability of the detected soiling of the imaging system can be further specified.

According to an embodiment, the soiling measure is updated iteratively. In this way, continuous evaluation of the provided image data and the soiling of the imaging system can be achieved.

According to an embodiment, determining the soiling measure comprises applying an infinite impulse response (IIR) filter of the first value and/or the second value of the soiling measure. In this way, the reliability of the soiling measure can be further increased.

According to a further embodiment, computing the first image processing data and computing the second image processing data comprises computing a transition between a current frame and a previous frame. In this way, static elements in the image data can be eliminated. Hence, the further processing of the image processing data only has to take into account changes in the image data.

According to an embodiment, computing a transition between the current frame and the previous frame comprises applying a Laplacian filter. A Laplacian filter is a very efficient and reliable way for filtering static elements in the image data.

According to a further embodiment, computing the first image processing data and the second image processing data comprises applying an infinite impulse response filtering to the computed transition between the current frame and the previous frame. By applying such an infinite impulse response filtering, the effects of moving objects in the coverage area of the imaging system can be removed.

According to a further embodiment, computing first image processing data and computing second image processing data comprises computing a sharpness of a captured first frame and a captured second frame. For example, the sharpness of a captured frame can be classified into a plurality of predetermined classes. For example, sharpness can be classified into "no edge", "blurred edge" and "sharp edge".

According to an embodiment, determining a soiling measure comprises comparing the computed sharpness of the first frame and the computed sharpness of the second frame.

Brief description of the drawings

The subject-matter of the present specification will be now explained in further detail with respect to the following figures, in which:

Figure 1     shows a schematic drawing of a vehicle comprising an imaging system according to an embodiment;

Figure 2     shows a schematic diagram of a flowchart of a soiling detection method underlying an embodiment;

Figure 3     shows a schematic diagram for determining sharpness in a frame according to an embodiment;

Figure 4     shows a schematic illustration of image data provided by an imaging system according to an embodiment; and

Figure 5     shows a schematic illustration of a soiling detection apparatus according to an embodiment.

Description of embodiments

In the following description, details are provided to describe the embodiments of the present invention. It shall be apparent to once skilled in the art, however, that the embodiments may be also practiced without such details.

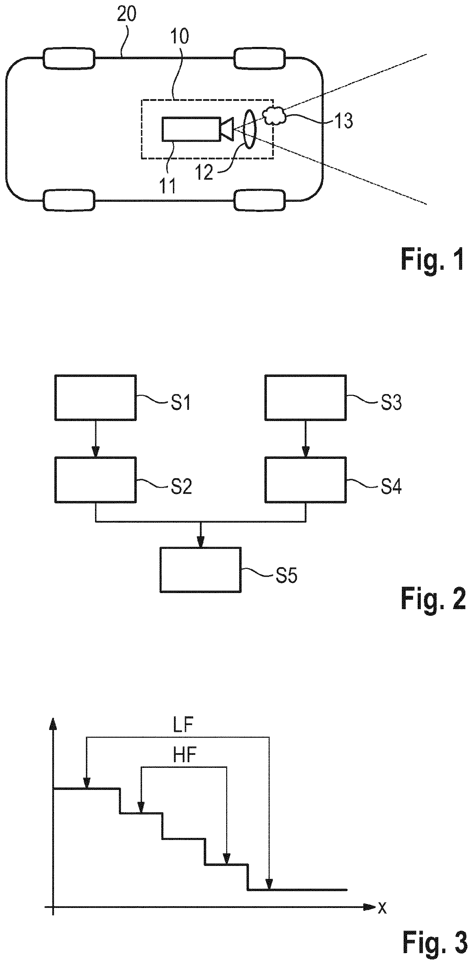

Figure 1 shows an image processing system according to an embodiment of the present invention. The image processing system comprises an imaging system 10. For example, the image processing system may be a part of an advanced driver assistance system (ADAS) of a vehicle 20. However, the imaging system 10 and the later described soiling detection apparatus of the image processing system is not limited to an ADAS or any other application of a vehicle. Furthermore, soiling detection of an imaging system may be also applied to any other image processing system.

The image processing system of Figure 1 comprises an imaging system 10. The imaging system 10 includes a camera 11 and a lens 12. Camera 11 captures image data and provides the image data to a further device for processing the image data. In particular, the image data may be provided in form of image frames. Camera 11 may capture image data in form of frames having a predetermined resolution. Further, camera 11 may capture frames in regular time intervals. Alternatively, any other form of capturing image data is possible, too.

During operation of the imaging system 10, the optical system of the imaging system 10 may be contaminated. For example, dust, particles, raindrops or any other kind of contamination may be located on lens 12. In order to avoid contamination of lens 12, the imaging system 10 may be located behind a windshield of a vehicle or any other transparent protecting element. In this case, the contamination 13 may be located on the windshield or the further protecting element. Due to this contamination 13, the image data captured by camera 11 may be disturbed.

For example, a vehicle 20 may stand still at an intersection, and another vehicle may splash water onto the windshield of the vehicle or on the lens 12 of imaging system 10. As a result, the image areas covered by this contamination do not provide appropriate image data for a further processing, in particular for use in an ADAS.

Figure 2 illustrates a flowchart of a method for soiling detection on the imaging system 10 underlying an embodiment of the present invention. In a first step S1, the imaging system 10 captures image data while the imaging system 10 is moving. For example, the imaging system 10 may successively capture first frames while the imaging system 10 is moving. Based on the captured first frame, or based on a plurality of successively captured first frames, in step S2 first image processing data are computed. Several different methods or algorithm may be used for computing the first image processing data. Some examples for computing first image processing data will be described below.

Capturing S1 of first frames and computing S2 of first image processing data is performed until the imaging system 10 stops moving. If the imaging system 10 stands still, in step S3 one or a plurality of successive second frames are captured. Based on the captured second frames, in step S4 second image processing data are computed. The computing of the second image processing data may be similar to the computing S2 of the first image processing data and will be also described below in more detail.

Finally, in step S5 a soiling measure is determined based on the computed first image processing data and the computed second image processing data. For this purpose, the first image processing data may be used as a reference image data and the second image processing data may be used as current image data. By computing a measure between the reference image data and the current image data, the determining step S5 for determining a soiling measure computes a first value specifying a degree soiling in the image data relating to the second frame, and a second value specifying a confidence value for the determined degree of soiling. In particular, the soiling measure may be computed separately for each pixel in the image data of the frames provided by the imaging system 10.

In the following, an example for soiling detection on an imaging system 10 is described. This first example is based on a computation of transitions in the image data of the frames provided by the imaging system 10. However, as will be seen further below, the soiling detection may be also performed by other analysis of the frames provided by the imaging system 10.

For each frame I provided by the imaging system 10, a magnitude of derivatives E is computed. Since the direction of the derivatives is not relevant for this method, the computation can be performed, for instance, by applying a simple Laplacian filter F to the image data of a frame I:

$$E = |I * F|$$

$$F = \left(\frac{1}{9}\right) \cdot \begin{bmatrix} 1 & 1 & 1 \\ 1 & -8 & 1 \\ 1 & 1 & 1 \end{bmatrix}$$

wherein: is a Laplacian filter.

Since the actual value of the derivatives is not important, it is sufficient to determine a transition matrix T. This transition matrix T can be determined, for instance, by the following formula:

$$T = \min(1, E / ThEdge),$$

wherein ThEdge is a threshold value that guarantees that a clear transition is detected.

Accordingly, transition T represents a matrix having the size of the frames provided by imaging system 10, wherein each element of this matrix represents the probability of a transition for the corresponding pixel.

In order to perform soiling detection on the imaging system 10, two sets of image processing data are used. The first image processing data sets are computed based on first frames provided by the imaging system 10 while the imaging system 10 is moving. Alternatively, if the method is started when the imaging system 10 is already standing still, a single first frame is captured and first image processing data sets are computed based on this single frame. Accordingly, first image processing data are computed as reference image data by the following formula:

$$R\_0 = T\_0$$

(for a first frame), and

$$R\_f+1 = (1-\alpha) \cdot R\_f + \alpha \cdot T\_f+1$$

(for the next frames), wherein f and f+1 are the number of frames, and $\alpha$ is a coefficient between 0 and 1. In particular, a small value, for example 0.1 may be used for $\alpha$. In this way, an infinite impulse response (IIR) filter is applied to the transition image T. The goal of this filtering is to remove the influence of moving objects in the field of view of the imaging system 10. A small value of $\alpha$ implies that higher filtering occurs. However, small values of $\alpha$ also may lead to the effect, that the past, where the imaging system 10 was observing something different, has bigger influence to the final reference image data.

This reference image data (first image processing data) is updated based on the frames provided by the imaging system 10 as long as the imaging system 10 is moving. If the imaging system stops, the updating of the reference image data stops, too. When the imaging system starts moving again, updating of the reference image data resumes.

If the imaging system 10 stops moving, second image processing data N is generated. The calculation of the second image processing data N is performed in a similar way to the calculation of the reference image data (first image processing data):

$$N\_0 = T\_0$$

(for a first frame), and

$$N\_f+1 = (1-\beta) \cdot N\_f + \beta \cdot T\_f+1$$

(for the next frames), wherein $\beta$ is also a small number, for instance 0.1. The goal of this filtering step is to remove the influence of moving objects in the field of view of the imaging system 10 from a more permanent effect on the lens due to soiling. Similar to $\alpha$, the choice of $\beta$ is important. A small value implies that higher filtering occurs but also that the detection takes more time to occur.

After the first image processing data (reference image data) and the second image processing data (current image data) have been calculated, detection of soiling is performed simply by updating soiling variables using the first and the second image processing data R and N. In particular, a soiling measure is determined by two variables S and C. A first soiling variable S represents a measure how satisfactory the soiling status is: S = 1 means that the lens is clear, and S = 0 means that the lens is soiled. A second soiling variable C represents a measure for the confidence of the determined soiling status S. Both variables can be initialized with one ("1") when the imaging system 10 stops. After that, the variables are updated according to the following formulas:

$$S\_f+1 = S\_f \cdot (1-\varepsilon \cdot R) + \varepsilon \cdot R \cdot N\_f+1,$$

and

$$C\_f+1 = C\_f \cdot (1-\varepsilon \cdot R) + \varepsilon \cdot R,$$

wherein $\varepsilon$ is a coefficient similar to $\alpha$ and $\beta$.

In particular, the soiling measure comprising the two soiling variables S and C may be determined for each pixel of an image frame provides by the imaging system 10. Accordingly, separate soiling variables may be obtained for each pixel.

If a transition is not present in the reference image data (first image processing data) for a pixel (i.e. R(x, y) = 0), then the two soiling variables S and C are not updated. This means, that there is no detail in the reference image data at this position and consequently, if there is soiling on the lens on that location, it is not possible to detect this soiling.

If a transition is present in the reference image data (first image data) for a pixel (i.e. R(x, y) = 1), then the first soiling variable S is updated with a portion of the value of the second image processing data corresponding to the current image data N. If the second image processing data also has a transition, then the satisfactory S will tend towards being classified as clear (i.e. S = 1). If the current image is not clear, the satisfactory S will start tending towards not being clear (i.e. S = 0). Since there is a transition in the first image data (reference image data) a confidence value C can be computed.

Finally, soiling can be detected based on the confidence value C and the satisfactory S of the soiling if the confidence C is larger than a predetermined confidence threshold value and the satisfactory S is less than a predetermined soiling threshold value. The image is clear if the confidence C is larger than the confidence threshold value and the soiling is larger than the soiling threshold. Finally, the status is unknown if the confidence value C is less than the confidence threshold value.

In the following, a further example for soiling detection on an imaging system 10 is described. This example considers edge sharpness in the image data provided by the frames of the imaging system 10. The steps S1 and S2 for capturing a first frame and a second frame by the imaging system 10 are similar to the capturing of the first and the second frame in the previous example. In particular, step S1 captures one or more first frames while the imaging system 10 is moving. Step S3 captures one or more second frames while the imaging system 10 is not moving. This embodiment mainly differs from the previous embodiment in the way of computing the first and the second imaging processing data in steps S2 and S4. In particular, the steps S2 and S4 for computing first image processing data and second image processing data comprises computing sharpness at each pixel of a frame provided by the imaging system 10. In the following one example for computing the sharpness will be presented. However, any other method for determining the sharpness of a frame provided by the imaging system 10 may be possible, too.

The basic idea behind the sharpness metric in this example is to divide a high frequency transition amount by the total size of an edge. Figure 3 illustrates schematic drawing for understanding the principle of a sharpness metric considering high frequency and low frequency derivatives. High frequency derivatives HF consider a transition amount within a small distance of pixels, while low frequency derivatives LF consider a transition amount over larger distances.

In a scenario having a sharp edge, the low frequency derivative LF, which is given, for example, by a convolution of the image with a kernel [1 0 0 0 -1] will have approximately the same value as a high frequency derivative HF, which is given, for example, by a convolution of the image with a kernel [1 0 -1]. Thus, a sharpness which is defined as a ratio of HF/LF will be approximately 1. In a blurred edge like the example of Figure 2, the sharpness will be smaller than 1, since the high frequency derivative HF is much smaller than the total edge size which is given by the low frequency derivative LF.

This principle is only valid when the low frequency derivative LF captures the size of the entire edge, which does not happen if the image resolution is too high with regard to the low frequency kernel that is being used and/or the kernel is shifted with regard to the center of the edge. If necessary, further processing needs to occur to guarantee that the output of the sharpness detector truly indicates the sharpness of the image for each pixel. However, this processing is well known and will not be discussed in further detail.

In the following, it is assumed that each pixel of the image is classified as being part of either no edge (value "0"), having a blurred edge (value "1") or having a sharp edge (value "2"). However, in principle, another classification may be also possible, if the soiling detection method is adapted accordingly.

In order to perform soiling detection, a first frame is captured by the imaging system 10 when the imaging system 10 stops (i.e. the end of the movement of the imaging system 10). Based on this first image, a sharpness detection is performed by computing first image processing data classifying the sharpness of the first frame as mentioned above. This classification of the sharpness for each pixel in the first frame can be stored as reference image data (first image processing data).

While the imaging system 10 is standing still, the imaging system 10 further provides second frames. For these second frames, a classification of the sharpness for each pixel is performed, too. The classification of the sharpness is the same as described above.

Based on a calculated sharpness R of the first frame and a calculated sharpness H of the second frames, soiling detection can be performed. For example, in a first step the first image processing data R and the second image processing data H are analyzed in order to determine if there is an edge in the first image processing data R (reference image data) and if this edge disappears in the second image processing data H (current image data). In this case, a further array D1 with the size of the frames provided by the imaging system 10 is created, wherein an element of this array D1 is set to "1" if the above condition is fulfilled, otherwise the respective element is set to "0". This can be represented by the following formula:

If ((R(x,y)=1) or (R(x,y)=2)) and (H(x,y)=0) then D1(x,y)=1; else D1(x,y)=0

Further, it is determined if a pixel which does not have an edge or does not have a sharp edge in the first image processing data R becomes blurred in the second image processing data H. In this case, a respective element of a further matrix D2 is set to "1". Otherwise, the respective element is set to "0". This can be represented by the following formula:

If ((R(x,y)≠1) and (H(x,y)=1) then D2(x,y)=1;

else D2(x,y)=0

Based on these two additional maps D1 and D2, the detection of a soiled area can be performed in two steps. First, a map D12(x,y) is created by

$$D12(x,y) = \max(D1(x,y), D2(x,y)).$$

In other words, the respective element of D12 will be set to "1" if either D1 or D2 is 1. With use of this map D12 it is possible to determine entire areas that are connected and which are candidates for detecting a soiling. Such connected areas relate to large areas which can be aggregated and treated as a single entity, for example a segment. The connected areas may have, for example a shape of a raindrop or another known element causing soiling on the imaging system 10.

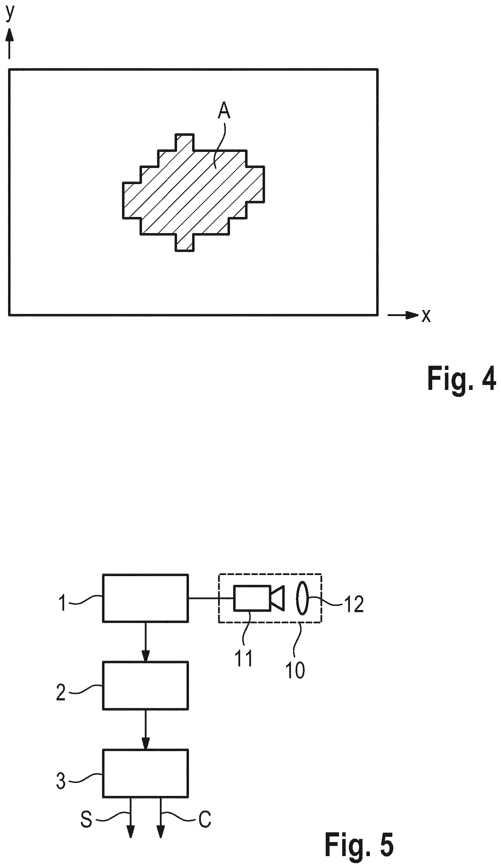

Figure 4 illustrates a map comprising such a connected area A.

In a further step, only those areas are considered as soiled areas, in which at least one pixel inside such an area is newly blurred, i.e. at least one element of D2(x y) = 1. The reason behind this step is that soiling on a lens creates an area of no edge content, but also an area with blurred content. Thus, it is expected that any soiling on an imaging system 10 will create some blurring. If no blurring is created close to edges that disappear, it might be because some object that was captured on the reference image (for example a person or a vehicle) has moved. Hence, such an element is not considered as a soiling area.

Once a blurred area has been found, this area N is used to update a potential soiling map. This can be performed similar to the previous embodiment by updating soiling variables. For example, the soiling variables S and C can be updated based on the following formula

$$S\_f+1 = S\_f \cdot (1-\varepsilon \cdot R) + \varepsilon \cdot R \cdot N\_f+1,$$

and

$$C\_f+1 = C\_f \cdot (1-\varepsilon \cdot R) + \varepsilon \cdot R,$$

This formula has been already explained above. A similar way to take this information into account is simply to compute a variable which indicates how much particular region is soiled by a simple infinite impulse response based on the following formula

$$S\_f+1 = S\_f \cdot (1-\varepsilon R) + \varepsilon \cdot N\_f+1.$$

Figure 5 shows a schematic illustration of a soiling detection apparatus according to an embodiment. The apparatus comprises an image receiving unit 1, an image data processor 2 and a soiling detector 3. The image receiving unit 1 is adapted to receive the first frame captured by the imaging system 10 while the imaging system 10 is moving. Further, the image receiving 1 is further adapted to receive a second frame, captured by the imaging system 10, while the imaging system 10 is not moving. The image data processor 2 is adapted to compute first image processing data based on a received first frame and to compute second image processing data based on a received second frame. The computation of the first and the second image processing data can be performed, for instance, as already described above in connection with the soiling detection method.

The soiling detector 3 is adapted to determine a soiling measure. The determination of the soiling measure can be performed as already described above in connection with the soiling detection method. In particular, the determination of the soiling measure can be performed for each pixel position by considering the first image processing data and the second image processing data. Based on these image processing data, a soiling measure can be computed comprising two soiling variables, in particular a first value specifying a degree of soiling and a second value specifying a confidence value for the first value.

This soiling detection apparatus can be employed, for example, in an image processing system, for example in a camera system of a vehicle. In particular, the image processing system may be part of an advanced driver assistance system for fully or partially automated driving of a vehicle.

Summarizing, the present invention relates to a soiling detection method for detecting soiling of an imaging system if the imaging system is standing still. It is for this purpose, that reference image data are generated while the imaging system is moving and based on this reference image data a further analysis of a captured image data can be performed while the imaging system is standing still. By comparing the reference data with image data generated while the imaging system is standing still, a soiling detection measure can be computed comprising a degree of soiling and a confidence value for this degree. In this way, a fast and reliable soiling detection of a still standing imaging system can be performed.

**Claims**

1. A method for soiling detection on an imaging system (10), comprising the steps of:

   capturing (S1), by the imaging system (10), a first frame, while the imaging system (10) is moving;
   computing (S2) first image processing data based on the captured first frame;
   capturing (S3), by the imaging system (10), a second frame, while the imaging system (10) is not moving;
   computing (S4) second image processing data based on the captured second frame; and
   determining (S5) a soiling measure for each pixel position covered by the imaging system (10) based on the computed first image processing data and the computed second image processing data, wherein said soiling measure comprises a first value specifying a degree of soiling and a second value specifying a confidence value of the first value,
   wherein computing (S1) first image processing data and computing (S2) second image processing data comprises computing sharpness of a captured first frame and a captures second frame, and
   wherein determining (S5) a soiling measure comprises comparing the computed sharpness of the first frame and the computed sharpness of the second frame.

2. The method according to claim 1, wherein soiling measure is updated iteratively.

3. The method according to claim 1 or 2, wherein determining (S5) a soiling measure comprises applying an infinite impulse filtering of the first value and/or the second value of the soiling measure.

4. A soiling detection apparatus for detecting soiling on an imaging system (10), the apparatus comprising:

an image receiving unit (1), adapted to receive a first frame, captured by the imaging system (10) while the imaging system (10) is moving, and to receive a second frame, captured by the imaging system (10) while the imaging system (10) is not moving;
an image data processor (2) adapted to compute first image processing data based on the received first frame, and to compute second image processing data based on the received second frame; and
a soiling detector (3), adapted to determine a soiling measure for each pixel position covered by the imaging system (10) based on the computed first image processing data and the computed second image processing data, wherein said soiling measure comprises a first value specifying a degree of soiling and a second value specifying a confidence value of the first value,
wherein computing first image processing data and computing second image processing data comprises computing a sharpness of a captured first frame and a sharpness of the captured second frame, and
wherein determining a soiling measure comprises comparing the computed sharpness of the first frame and the computed sharpness of the second frame.

5. An image processing system, comprising

an imaging system (10) including a camera (11), adapted to capture image data;
a soiling detection apparatus according to claim 4.

6. An advanced driver assistance system comprising an image processing system according to claim 5.

**Patentansprüche**

1. Verfahren zur Verschmutzungsdetektion auf einem Bildgebungssystem (10), aufweisend die Schritte:

Aufnehmen (S1) durch das Bildgebungssystem (10), eines ersten Einzelbilds, während sich das Bildgebungssystem (10) bewegt;
Berechnen (S2) erster Bildverarbeitungsdaten auf Basis des aufgenommenen ersten Einzelbilds;
Aufnehmen (S3), durch das Bildgebungssystem (10), eines zweiten Einzelbilds, während sich das Bildgebungssystem (10) nicht bewegt;
Berechnen (S4) zweiter Bildverarbeitungsdaten auf Basis des aufgenommenen zweiten Einzelbilds; und
Bestimmen (S5) eines Verschmutzungsmaßes für jede durch das Bildgebungssystem (10) abgedeckte Pixelposition auf Basis der berechneten ersten Bildverarbeitungsdaten und der berechneten zweiten Bildverarbeitungsdaten, wobei das Verschmutzungsmaß einen ersten Wert aufweist, der einen Verschmutzungsgrad spezifiziert, und einen zweiten Wert, der einen Konfidenzwert des ersten Werts spezifiziert,
wobei das Berechnen (S1) erster Bildverarbeitungsdaten und das Berechnen (S2) zweiter Bildverarbeitungsdaten das Berechnen einer Schärfe eines aufgenommenen ersten Einzelbilds und eines aufgenommenen zweiten Einzelbilds aufweist, und
wobei das Bestimmen (S5) eines Verschmutzungsmaßes das Vergleichen der berechneten Schärfe des ersten Einzelbilds und der berechneten Schärfe des zweiten Einzelbilds aufweist.

2. Verfahren nach Anspruch 1, wobei das Verschmutzungsmaß iterativ aktualisiert wird.

3. Verfahren nach Anspruch 1 oder 2, wobei das Bestimmen (S5) eines Verschmutzungsmaßes das Anwenden einer infiniten Pulsfilterung des ersten Werts und/oder des zweiten Werts des Verschmutzungsmaßes aufweist.

4. Verschmutzungsdetektionsvorrichtung zum Detektieren der Verschmutzung eines Bildgebungssystems (10), wobei die Vorrichtung umfasst:

eine Bildempfangseinheit (1), ausgelegt zum Empfangen eines ersten Einzelbilds, aufgenommen durch das Bildgebungssystem (10), während sich das Bildgebungssystem (10) bewegt, und zum Empfangen eines zweiten Bilds, aufgenommen durch das Bildgebungssystem (10), während sich das Bildgebungssystem (10) nicht bewegt;

einen Bilddatenprozessor (2), ausgelegt zum Berechnen erster Bildverarbeitungsdaten auf Basis des empfangenen ersten Einzelbilds, und zum Berechnen zweiter Bildverarbeitungsdaten auf Basis des empfangenen zweiten Einzelbilds; und
einen Verschmutzungsdetektor (3), ausgelegt zum Bestimmen eines Verschmutzungsmaßes für jede durch das Bildgebungssystem (10) abgedeckte Pixelposition auf Basis der berechneten ersten Bildverarbeitungsdaten und der berechneten zweiten Bildverarbeitungsdaten, wobei das Verschmutzungsmaß einen ersten Wert, der einen Verschmutzungsgrad spezifiziert, und einen zweiten Wert, der einen Konfidenzwert des ersten Werts spezifiziert, aufweist,
wobei das Berechnen erster Bildverarbeitungsdaten und das Berechnen zweiter Bildverarbeitungsdaten das Berechnen einer Schärfe eines aufgenommenen ersten Einzelbilds und einer Schärfe des aufgenommenen zweiten Einzelbilds aufweist, und
wobei das Bestimmen eines Verschmutzungsmaßes das Vergleichen der berechneten Schärfe des ersten Einzelbilds und der berechneten Schärfe des zweiten Einzelbilds aufweist.

5.  Bildverarbeitungssystem, aufweisend

ein Bildgebungssystem (10) einschließlich einer Kamera (11), ausgelegt zum Aufnehmen von Bilddaten;
eine Verschmutzungsdetektionsvorrichtung nach Anspruch 4.

6.  Fortgeschrittenes Fahrerassistenzsystem umfassend ein Bildverarbeitungssystem nach Anspruch 5.


**Revendications**

1.  Procédé de détection de salissures sur un système d'imagerie (10), comprenant les étapes de :

capture (S1), par le système d'imagerie (10), d'une première image, pendant que le système d'imagerie (10) se déplace ;
calcul (S2) de premières données de traitement d'image sur la base de la première image capturée ;
capture (S3), par le système d'imagerie (10), d'une seconde image, pendant que le système d'imagerie (10) ne se déplace pas ;
calcul (S4) de secondes données de traitement d'image sur la base de la seconde image capturée ; et
détermination (S5) d'une mesure de salissure pour chaque position de pixel couverte par le système d'imagerie (10) sur la base des premières données de traitement d'image calculées et des secondes données de traitement d'image calculées, ladite mesure de salissure comprenant une première valeur spécifiant un degré de salissure et une seconde valeur spécifiant une valeur de confiance de la première valeur,
le calcul (S1) de premières données de traitement d'image et le calcul (S2) de secondes données de traitement d'image comprenant le calcul de la netteté d'une première image capturée et d'une seconde image capturée, et
la détermination (S5) d'une mesure de salissure comprenant la comparaison de la netteté calculée de la première image et de la netteté calculée de la seconde image.

2.  Procédé selon la revendication 1, la mesure de salissure étant mise à jour de manière itérative.

3.  Procédé selon la revendication 1 ou 2, la détermination (S5) d'une mesure de salissure comprenant l'application d'un filtrage à réponse impulsionnelle infinie de la première valeur et/ou de la seconde valeur de la mesure de salissure.

4.  Appareil de détection de salissures pour détecter des salissures sur un système d'imagerie (10), l'appareil comprenant :

une unité de réception d'image (1), adaptée pour recevoir une première image, capturée par le système d'imagerie (10) pendant que le système d'imagerie (10) se déplace, et pour recevoir une seconde image, capturée par le système d'imagerie (10) pendant que le système d'imagerie (10) ne se déplace pas ;
un processeur de données d'image (2) adapté pour calculer des premières données de traitement d'image sur la base de la première image reçue, et pour calculer des secondes données de traitement d'image sur la base de la seconde image reçue ; et
un détecteur de salissures (3), adapté pour déterminer une mesure de salissures pour chaque position de pixel couverte par le système d'imagerie (10) sur la base des premières données de traitement d'image calculées et des secondes données de traitement d'image calculées,

ladite mesure de salissure comprenant une première valeur spécifiant un degré de salissure et une seconde valeur spécifiant une valeur de confiance de la première valeur,

le calcul de premières données de traitement d'image et le calcul de secondes données de traitement d'image comprenant le calcul d'une netteté d'une première image capturée et d'une netteté de la seconde image capturée, et

la détermination d'une mesure de salissure comprenant la comparaison de la netteté calculée de la première image et de la netteté calculée de la seconde image.

5. Système de traitement d'images, comprenant :

un système d'imagerie (10) comprenant une caméra (11), adaptée pour capturer des données d'image ;
un appareil de détection de salissures selon la revendication 4.

6. Système d'assistance au conducteur avancée comprenant un système de traitement d'image selon la revendication 5.

**Fig. 1**

**Fig. 2**

**Fig. 3**

**Fig. 4**

**Fig. 5**

**EP 3 282 420 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2351351 A1

- US 2015298657 A1, KANTER PASCAL

**Non-patent literature cited in the description**

- **CHEN LI et al.** *Dust particle detection in traffic surveillance video using motion singularity analysis*

- **KATAJAMAEKI J et al.** *Objective quality potential measures of natural color images*